# EUROPEAN PATENT APPLICATION

(11) **EP 4 742 037 A1**
(43) Date of publication of application: **13.05.2026**
(21) Application number: 25215296.2
(22) Date of filing: 12.11.2025
(51) Int. Cl.: G06F 9/50, G06F 1/3287, G06F 1/329, G06N 3/08, G06N 20/00, H04L 67/10, H04W 72/00

(54) **A METHOD OF MANAGING HARDWARE RESOURCES IN AN OPEN RAN CLOUD PLATFORM, A CLOUD PLATFORM AND A COMPUTER PROGRAM**

(30) Priority: 12.11.2024 GB 202416623
(71) Applicant: Vodafone Group Services Limited, Newbury RG14 2FN (GB)
(72) Inventor: LAW, Alan, London, W2 6BY (GB); LU, Zhanhong, London, W2 6BY (GB)
(74) Representative: Boult Wade Tennant LLP

(57) **Abstract**

A method of managing hardware resources in an Open Radio Access Network (Open RAN) cloud platform is provided. The cloud platform comprises a plurality of processor cores. The cloud platform is configured to host a plurality of application processes. The method comprises dynamically allocating zero or more processor cores of the plurality of processor cores to each of the plurality of application processes, based on processing requirements of the respective application process.

## Description

### Field of the invention

The present invention relates to management of hardware resources in an Open Radio Access Network cloud platform. In particular, the invention relates to methods of dynamically allocating CPU cores to application processes.

### Glossary

RAN - Radio Access Network
MNO - Mobile Network Operator
O-RAN - Open RAN Alliance
O-DU - Open Distributed Unit
O-CU - Open Central Unit
O-RU - Open Radio Unit
OS - Operating System
GPU - Graphics Processing Unit
API - Application Programming Interface
SMO - Service Management and Orchestration
DMS - Deployment Management Services
NF - Network Function
IMS - Infrastructure Management Services
COTS - Commercial Off-The-Shelf
CaaS - Containers as a Service
CPU - Central Processing Unit
TTI - Transmission Time Interval
MIMO - Multiple Input Multiple Output
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Open RAN is a technology architecture concept directed to decoupling the hardware and software components of a Radio Access Network (RAN). It is a RAN that includes open interoperable interfaces and virtualization. In prior art (Non-Open) RANs, the hardware and software components are typically proprietary. Non-Open RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

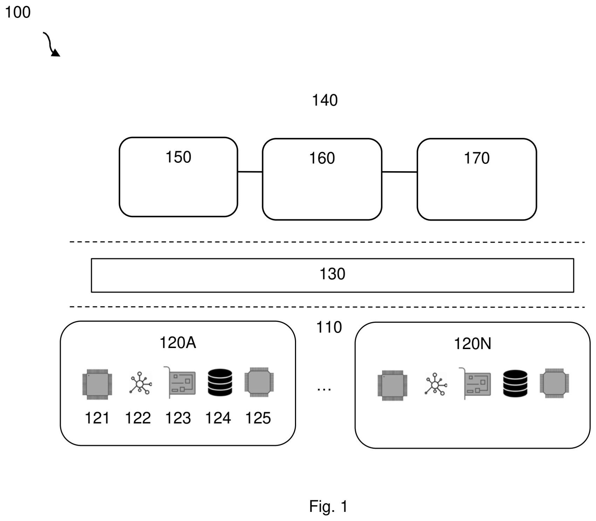

Fig. 1 illustrates some of the elements of an example Open RAN system 100, which is implemented as a cloud computing platform (O-Cloud). The system 100 may be described with reference to different hardware and software layers of the platform.

At the O-Cloud Node layer 110, the system comprises one or more physical infrastructure nodes 120A, 120N that meet O-RAN requirements. Each physical infrastructure node 120A comprises computing 121, networking 122, GPU 123, and storage 124 components, alongside acceleration technologies 125 for RAN operations (such as forward error correction and other computationally intensive operations that are offloaded to dedicated hardware). Each physical infrastructure node 120A, 120N is configured to host the relevant O-RAN network functions 150, 160, which are implemented at the Open RAN application layer 140. The network functions 150, 160 implemented at the Open RAN application layer 140 may include O-CU 160, O-DU 150, and O-RU.

At the O-Cloud hypervisor or containers / OS layer 130, there exists a collection of cloud functions to enable the Open RAN applications 150, 160 to run on the one or more O-Cloud hardware nodes 120A. The cloud functions may comprise supporting software components, such as an operating system, Containers (stand-alone executable software packages), a Container Orchestration Platform (such as Kubernetes), a container runtime, and the like. The cloud functions may also include the corresponding management and orchestration functions.

The O-Cloud serves as a fundamental component for facilitating cloud computing capabilities within the context of RAN network functions. It comprises both hardware and software elements. In particular, its software exposes open APIs, fostering interoperability and flexibility across various vendor solutions. With a decoupled architecture, the O-Cloud allows for sourcing hardware from different vendors, promoting neutrality and flexibility in hardware selection. It supports Service Management and Orchestration (SMO), enabling homing decisions and selecting Deployment Management Services (DMS) for Network Function (NF) Deployments. The DMS handles workload placement, lifecycle management, and resource allocation within O-Cloud Node Clusters, while Infrastructure Management Services (IMS) ensure the infrastructure's availability, reliability, and performance. Moreover, the O-Cloud offers automation capabilities, enhancing efficiency and reducing manual intervention, ultimately supporting efficient resource utilization and scalability for RAN network functions in a cloud-native environment.

The O-Cloud provides a fundamental platform for Open RAN that enables containerized RAN software to be implemented onto any COTS hardware. In order to support Open RAN applications, the O-Cloud implements Containers as a Service (CaaS). One of the important functionalities of the O-Cloud platform is to schedule different RAN workloads (running in respective Pods) and assign hardware resources (such as Compute, Storage and Networking resources).

In existing O-Cloud solutions, dedicated hardware resources are allocated to each application process. In cases of high software load, the workload scheduler may allocate additional hardware resources to the application process. However, in times of low load, the dedicated hardware resources may be under-used. The present disclosure aims to address this issue.

Moreover, in existing O-Cloud solutions, the workload scheduler runs will assign the hardware resource (i.e. number of CPUs, storage, etc.) based on the requirements of the RAN software. When the CPU/storage is insufficient to support the workload, the O-Cloud scheduler will scale up to assign more CPU/storage to certain Pods. When the pod workload is reduced, the O-Cloud scheduler will scale down to reduce the CPU/storage resource. Currently the scale up/scale down is still triggered by the application and actual workload in a passive mode. It takes time to scale up/down the available hardware resources, which may result in potential lags between the scale up/down and the change in demand. The present disclosure aims to address this issue.

### Summary

A method of managing hardware resources in an Open Radio Access Network (Open RAN) cloud platform is provided. The cloud platform comprises a plurality of processor cores. The cloud platform is configured to host a plurality of application processes. The method comprises dynamically allocating zero or more processor cores of the plurality of processor cores to each of the plurality of application processes, based on processing requirements of the respective application process.

As described above, in prior art O-Cloud solutions dedicated cores are allocated to each application process, which may result in hardware resources being underused in times of low load. In contrast, the proposed methods dynamically allocate a pool of processor cores so that there may be zero cores allocated to an application process and dedicated cores for each process are not needed. In this way, by freeing up the previously dedicated cores, the number of cores in the pool that are available for allocation is increased, compared to prior art methods. This may allow the workload scheduler to allocate hardware resources more efficiently.

Moreover, this may enable the workload scheduler to enact power-saving measures by placing any idle cores in a power-saving mode. In prior art O-cloud solutions, dedicated cores may be required to be always available and therefore cannot be placed in power-saving mode, even if their workload is low or zero. In contrast, the proposed methods allow zero cores to be allocated to application processes that have no workload and the unused cores in the pool may be placed in a power-saving mode.

The application processes may also be referred to as "RAN Workloads".

The hardware resources may comprise one or more central processing units, CPUs (which may each comprise one or more of the plurality of processor cores), networking resources and/or storage resources.

The dynamically allocated cores may be the only cores allocated to the application processes. In other words, there may be no statically allocated cores (dedicated cores) for the application processes.

The cloud platform may be configured to host a plurality of network functions and each network function may comprise one or more applications. Each application may comprise one of more application processes of the plurality of application processes.

Dynamically allocating zero or more cores to each of the plurality of application processes may comprise allocating zero cores to an application process if the respective processing requirements of the application process are zero (and/or are forecast to be zero for a predetermined period of time).

In other words, the method may comprise determining that the processing requirements of an application process are zero and dynamically allocating zero cores to that application process (and de-allocating any previously allocated cores).

The cloud platform may be a containerised cloud platform. Each of the application processes may be hosted via a respective pod managed by the containerised cloud platform.

One or more of the plurality of processor cores may be dedicated cores allocated to a scheduler of the cloud platform. These dedicated cores may not form part of the resource pool and so may be unavailable for allocating to the plurality of application processes.

The scheduler of the cloud platform may be referred to as an O-cloud scheduler or, where the cloud platform is a containerised cloud platform, as a CaaS scheduler.

Each of the plurality of processor cores that are not the one or more dedicated cores may form a resource pool. Dynamically allocating zero or more processor cores of the plurality of processor cores to each of the plurality of application processes may comprise dynamically allocating the zero or more processor cores from the resource pool to each of the plurality of application processes.

In other words, there may be no cores that are dedicated to a particular application process and no application process may be permitted to have a dedicated core.

The processor cores may be allocated to a pool of processor cores (all except the dedicated cores for the O-cloud platform). The cores may be dynamically allocated to the application processes from the pool. The application processes may therefore not have any dedicated cores.

The processing requirements of each application process may comprise forecasted processing requirements. A model may be used to forecast the processing requirements for the application processes.

In other words, the method may further comprise forecasting/predicting the load of the application processes, so that the processor cores may be dynamically allocated to the application processes, based on forecasted/predicted processing requirements of the respective application process (instead of, or in addition to, the instantaneous processing requirements of the respective application process).

As described above, in prior art O-Cloud solutions the workload scheduler operates in a passive mode (allocating dedicated cores and responding dynamically to increase the cores based on instantaneous requirements of the RAN software). In contrast, the proposed solution transforms the workload scheduler in O-Cloud platform from a passive mode into proactive mode using an Artificial Intelligence (AI) model to forecast the requirements of the RAN software and scale up/down in anticipation.

The AI model may learn the workload pattern from RAN workload history data. Preferably, the AI model is trained using a large quantity of historical data. For example, the Al model may be trained using 3-6 months of live network workload data. The trained Al model may predict the workload (e.g., for the next minutes or hours) based on the historical data. Then the workload scheduler can allocate cores to applications processes to carry out scale up/scale down automatically, based on the predicted workload. In this way, the workload scheduler operates in a proactive mode, instead of passive mode as before. One benefit of this solution is to improve the hardware utilization efficiency, make full use of the COTS hardware resources, and thus to improve the performance of the OpenRAN platform.

The methods may be performed by an O-Cloud scheduler. The O-Cloud scheduler may also be referred to as a CaaS scheduler (or Kubernetes scheduler).

Network workload data may be provided per application process (i.e., on a per-pod basis). The model may therefore forecast the workload per application process. The O-Cloud scheduler may assign CPU resources to each pod according to forecasted workload.

In this way, the O-Cloud scheduler can assign the CPU resources more intelligently to improve resource utilization and overall efficiency.

The model may be an artificial intelligence, AI, model.

The model may be trained using historical data of the processing requirements of the application processes.

The method may further comprise training the model. The model may therefore learn the traffic pattern for each application process (i.e. for each pod). The model may therefore be used to predict the future traffic load for each pod, based on the historical pattern.

The model may be based on a schedule. For example, the model may predict the workload based on the time of day, day of week, etc..

The model may also be referred to as an "algorithm".

The model may be trained ahead of time based on several months of live data (e.g., 3-6 months of traffic) or synthetic data. Synthetic training data may be generated using an Al model.

To test and update the model, the trained model may be run in an edge centre of the Open RAN and may collect live traffic data for anther period of time (e.g., 3 months). Then, the offline analysis may be run again using the additional data to determine whether the model works well. The model may then be updated based on this analysis.

The model may also be fine-tuned in real-time. Locally in the edge centre, small (marginal) tuning of the configuration of the model may be performed, based on live traffic (this fine-tuning may be applied to configurations of the model, rather than re-training the model, which is generally performed offline).

Each of the plurality of processor cores may be operable in one or more processor idle sleep states (such as C-states in Intel processors). The method may further comprise transitioning a processor core of the plurality of processor cores to an idle sleep state, based on the forecasted processing requirements of the respective application process to which the processor core is allocated.

While in an idle sleep state, processing operations of the processor core may be suspended. A power consumption of the processor core may be reduced in each of the one or more idle sleep states, as compared to a normal state.

There may be a plurality of idle sleep states having different properties. For example, in a first idle sleep state, the processor core may be able to return to the normal state essentially instantaneously. In a second idle sleep state, a power consumption of the processor core may be reduced, as compared to the first idle sleep state. However, it may take longer to return to the normal state, as compared to the first idle sleep state.

In some examples, the idle sleep state may be a C-state. The idle sleep states may comprise C1 to C6 states, where C1 is static CPU sleeping state, and C6 is dynamic CPU sleep state (which is the most efficient one for energy saving).

The CPU may be put in idle sleep state statically or dynamically, based on pod-level workload. For example, the O-Cloud manager may place one or more cores in C-state for a predetermined period of time, based on the forecasted usage. In this way, the proposed methods may reduce energy consumption in the OpenRAN.

As described above, the proposed methods may use Al to predict the workload of each Pod. If the AI predicted pod workload in next TTI (e.g., 10ms) is zero, then the O-Cloud manager may put the assigned CPU (for the respective Pod) into a sleep state, thus saving energy. In other examples, the O-Cloud manager may put one or more CPUs from the resource pool that are not allocated to an application process (i.e., a respective pod) into a sleep state.

In some examples, C-state may be defined as a control state of the core allowing micro-sleeps or longer to be applied. Hence, a C-state may be defined as an extension of the performance control state of the allocated core.

Each of the plurality of processor cores may be operable in one or more power performance states (e.g., so called "P-states"). The method may further comprise transitioning a processor core of the plurality of processor cores to a power performance state, based on the forecasted processing requirements of the respective application process to which the processor core is allocated.

In other words, one or more processor cores may be put in power performance states statically or dynamically, based on pod-level workload.

A power consumption of the processor core may be reduced in each of the one or more power performance states, as compared to a normal state.

There may be a plurality of power performance states having different properties. For example, in a first power performance state, the processor core may operate with reduced power consumption and reduced capacity. In a second power performance state a power consumption and capacity of the processor core may be further reduced, as compared to the first power performance state.

In some examples, the power performance state may be a P-state. P-States may be used for energy saving in an analogous manner to C-states. If the Al predicted pod workload in the next TTI (e.g. 10ms) is zero, then the O-cloud manager may reduce the CPU frequency and voltage running to save energy.

By using power performance states, resource capacity of processor cores may be adjusted and effectively utilised, while conserving power. In contrast, some prior art methods simply allocate cores to pods to meet processing requirements (so either use or not use the core).

By using power performance states, the proposed methods may introduce stepped performance levels for the allocated cores. This may be used to control energy consumption, as higher allocated performance states consume more energy.

The processing requirements may comprise a data processing load and/or a network traffic load.

The processing requirements may comprise a forecasted data processing load and/or network traffic load.

A data processing load may be an indication of the processing requirements of the application process (or respective pod). In other words, a data processing load may be the workload of the cloud platform executing the application process of the RAN application.

A network traffic load may be an indication of network traffic handled by the RAN application. In other words, a network traffic load may be the workload of the RAN application itself.

Each of the plurality of processor cores may be operable in a normal mode and a power-saving mode, the method further comprising:
transitioning one or more of the plurality of processor cores to power-saving mode, based on the processing requirements of the plurality of application processes; and/or
transitioning one or more of the plurality of processor cores from power-saving mode to normal mode, based on the processing requirements of the plurality of application processes (i.e. if more hardware resources are needed or are forecasted to be needed, transition sleeping cores to normal mode, ready to be allocated).

In other words, if no more hardware resources are needed and are not forecasted to be needed, idle cores may be transitioned to power-saving mode (e.g., a "sleep state").

In the normal mode, the processor core may carry out instructions on behalf of the application processes. In the power saving mode, the processor core may be unavailable for carrying out instructions (e.g., in a sleep state) or may carry out instructions at a reduced capacity.

The one or more of the plurality of processor cores that are transitioned to power-saving mode may be one or more of the plurality of processor cores that are not allocated to an application process. For example, if cores in the resource pool are idle, they may be placed in power-saving mode, unless the forecast indicates that they will be needed soon.

Cores allocated to an application process may be placed in a power-saving mode, if the cores are idle and the forecast indicates that they will not be needed soon.

The one or more power-saving modes may comprise:
one or more processor idle sleep state (e.g., C-states); and/or
one or more power performance states (e.g., P-states).

A predicted traffic load for each pod may be used to assist the O-Cloud manager to put CPU cores allocated to the RAN application in a power-saving mode (e.g., via C-state/P-state modes), thus saving energy.

The cloud platform may comprise one or more servers (preferably a plurality of servers). The plurality of processor cores may comprise a respective plurality of processor cores from each server.

The resource pool may comprise cores from each of the plurality of servers.

A cloud platform configured to perform any of the methods described above is also provided.

A computer program comprising instructions that, when executed on a processor, cause the processor to perform any of the methods described above is also provided.

### Brief description of the drawings

Fig. 1 illustrates an example cloud platform.
Fig. 2 illustrates the differences between Single (Non-Open) RAN and Open RAN.
Fig. 3 illustrates a cloud platform for OpenRAN.
The invention will be described with reference to the non-limiting examples illustrated in the following Figures.
Fig. 4 illustrates an example cloud platform for OpenRAN.
Fig. 5 illustrates a cloud platform according to a specific example.

### Detailed description

Prior to Open RAN, mobile networks were built by a small number of vendors with tightly coupled hardware and software. Interoperability between equipment from different vendors was restricted and this arrangement resulted in limited flexibility and innovation. It is an aim of Open RAN to improve the traditional model by decoupling hardware and software components. This enables greater flexibility, innovation, and cost-effectiveness in building and operating mobile networks.

As described above, the Open RAN system decouples hardware and software in the RAN network and allows hardware and software components to be provisioned separately. In order to do so, new standards for interactions between the hardware and software components of the Open RAN system have been provided by the Open RAN Alliance (the term "O-RAN" generally refers to standards specified by the Open RAN Alliance).

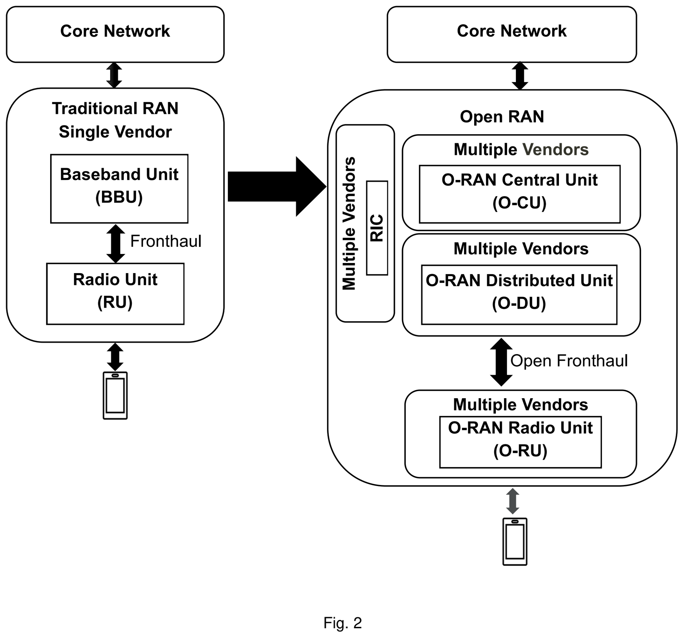

Fig. 2 illustrates the differences between Single (Non-Open) RAN and Open RAN. By moving from a Single RAN to an Open RAN, the following benefits may be achieved:
Disaggregation;
Decoupling HW from SW;
Open Ecosystem;
Open Interfaces; and
Intelligent Management.

Open RAN enables interoperability for hardware and software elements provided by different suppliers. By doing so, Open RAN also provides resilience for the MNO by promoting supplier diversity in the network. If elements from a specific supplier cease to function correctly or need to be removed permanently or temporarily (e.g., due to security or performance requirements), elements from another supplier may be relied upon instead, without major disruption to the network.

Open RAN also offers potential energy efficiency improvement, for example through flexible provisioning of hardware to meet network requirements.

Open RAN enables Functional Block Separation where the baseband processing functions are separated into distinct blocks, allowing various vendors to contribute and innovate. To achieve true interoperability and innovation, this however requires solutions from different vendors to work together seamlessly. Ensuring seamless interoperability between hardware and software components across competing vendors is crucial for the success of Open RAN. The disaggregation of RAN functions into software-based components that can be hosted on different processor architectures introduces interoperability challenges while managing and orchestrating these functions.

The cloud platform, which is sometimes referred to as the "O-Cloud", serves as a fundamental component of the Open RAN system. The cloud platform comprises hardware and software components. The hardware components of the cloud platform include physical infrastructure nodes arranged in one or more node clusters (also referred to as "server nodes"). These provide the hardware resources that are needed to support the network function deployments (e.g., O-RU, O-DU and O-CU), which are implemented in software applications (also referred to as "client nodes") running on the cloud platform hardware.

The physical infrastructure nodes of the cloud platform (server nodes) comprise the physical hardware resources required to support the network function deployments, while the software applications (client nodes) define the functionality of the network function deployments.

To facilitate interoperability and create an environment for competition and innovation, one characteristic of virtualized and open RAN is that multiple hardware and software vendors can coexist within an operator's RAN domain. Standards and interfaces are defined to enable interworking.

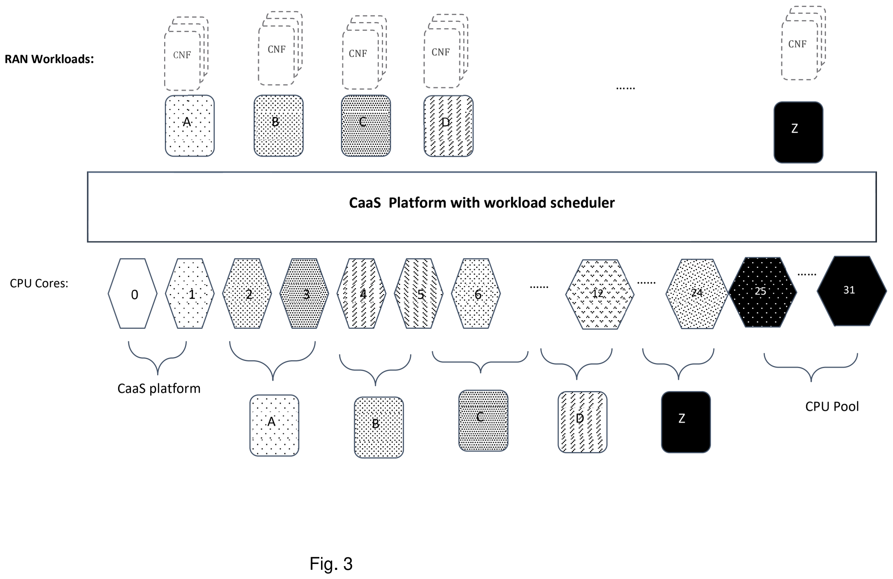

Fig. 3 illustrates a cloud platform for OpenRAN. The platform is a "containerised" cloud platform. Each of the one or more RAN applications hosted by the cloud platform is formed of one or more application processes. Each application process may be hosted via a discrete container that is referred to as a "pod", managed by the containerised cloud platform. Each pod represents a discrete workload. The manager of the cloud platform is configured to allocate resources, such as CPU cores, to the one or more pods.

In an illustrative example, a single RAN system may host a RAN application comprising 1000 lines of code. The application software consists of a single workload and a single application package. In contrast, an Open RAN system may break the code into packages of 100 lines each (application processes) and run these application processes via 10 pods. The CaaS layer schedules pod workloads to assigned CPU cores. One or more (usually two) CPU cores may be reserved for the CaaS scheduler and the remainder may be allocated to pods or paced in a resource pool.

As can be seen in Fig. 3, each RAN application is statically allocated one or more dedicated CPU cores (for each dedicated pod hosting a respective application process). For the specific example illustrated in Fig. 3, the allocation of CPU cores is as follows:

| | CPU cores |
|---|---|
| CaaS Platform | 0, 1 |
| CPU pool | 25-31 |

| RAN Workload (application process) | Dedicated CPU cores |
|---|---|
| A | 2, 3 |
| B | 4, 5 |
| C | 6 |
| D | 7-12 |
| ... | ... |
| Z | 24 |

It is typical for the vendor of the RAN application to request dedicated resources for the RAN application processes, regardless of a workload of the RAN application. Even if there is no traffic running on a pod, the dedicated CPU core is still reserved. Therefore, if the RAN application has a zero or very low workload, these dedicated resources are not efficiently utilised.

Moreover, if each RAN application hosted by the cloud platform has dedicated resources, only small number of CPU cores may be available to form a resource pool for dynamically allocating (by the CaaS scheduler) the resources where they are needed (i.e. dynamically scheduling pod workloads on pooled resources).

Different application processes may have different demands on the software in the pods. The cloud scheduler according to Fig. 3 statically allocates a fixed number of CPU cores to the respective pod (each pod asks to be allocated a fixed number). If additional resources are required for the pod, beyond the fixed allocation, these may need to be provided by a separate server, due to security requirements. This may further limit the flexibility of the cloud platform and lead to inefficiencies.

Power consumption is relatively high for reserved CPU cores. Allocated CPU cores may be powered down to save energy when not in use. However, they remain allocated to the application process.

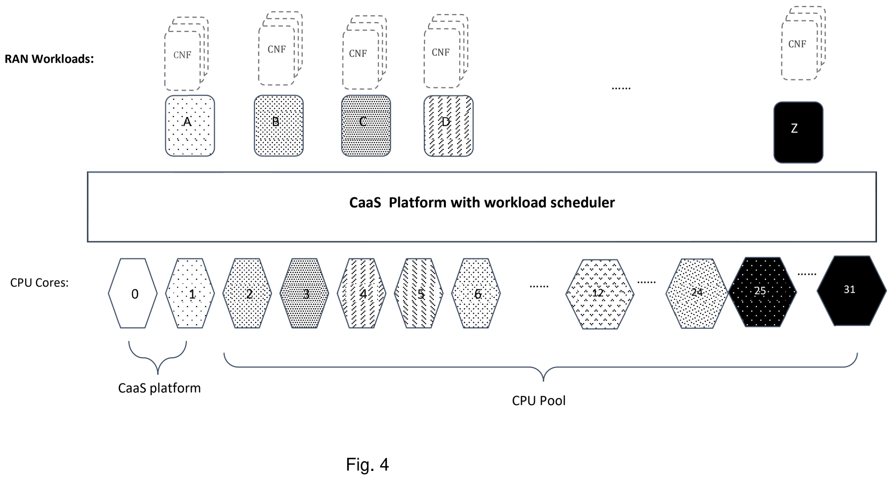

The cloud platform illustrated in Fig. 3 is not in accordance with the proposed methods. An improved cloud platform that illustrates a specific example of the proposed methods is illustrated in Fig. 4.

In contrast to the cloud platform illustrated in Fig. 3, the cloud platform of Fig. 4 does not allocate dedicated (permanently reserved) CPU cores to specific pods. Instead, the CPU cores are provided in a resource pool and the scheduler reactively allocated work to the CPU cores based on load levels of the pods. For example, cores 2 to 4 may be allocated to pod A during first TTI when the workload of pod A is high but cores 3 and 4 may be allocated to pod B during a second TTI when the workload of pod B is high.

The cloud platform for OpenRAN illustrated in Fig. 4 comprises an intelligent workload scheduler. In this specific example, the intelligent workload scheduler (the O-Cloud scheduler / CaaS scheduler) uses an Al model to predict the workflow of the application processes and may assign cores based on the predictions from the model.

As illustrated in Fig. 4, one or more CPU cores may be allocated to the O-Cloud scheduler (CaaS platform scheduler). In the specific example illustrated in Fig. 4, there are two CPU cores allocated to the O-Cloud scheduler. Besides these two CPU cores, the rest of the CPU cores can be formed into resource pool. For the specific example illustrated in Fig. 4, the allocation of CPU cores is as follows:

| | CPU cores |
|---|---|
| CaaS Platform | 0, 1 |
| CPU pool | 2-31 |

The CaaS scheduler can schedule application processes (hosted in a respective pod) onto different CPU cores, based on a traffic load that each pod is carrying. An Al model may be used to learn the traffic pattern for each pod, then predict the future traffic load based on the historical pattern. The CaaS scheduler can therefore assign CPU resources to each pod (i.e., scaling up and scaling down), according to predicted traffic load for the next TTI (alongside live traffic measurement levels). The scheduler can assign the CPU resources intelligently to improve the CPU utilization and efficiency of the cloud platform.

The predicted traffic load on each pod may also be used to assist RAN applications to put CPU cores in a power saving mode (e.g., C-state/P-state mode), thus saving energy.

C-State and P-State can respectively switch off and scale down the CPU cores when not in use. In contrast to prior art methods, which reactively place CPU cores in power-saving mode based on immediate workload, the proposed methods may implement power-saving modes based on predicted workload. This may lead to improved efficiency, as processor cores may be placed in deeper power-saving modes (that save more power but take more time to wake from), based on a confidence of future workload. This may also lead to increased responsiveness, because the O-Cloud scheduler may pre-emptively wake processor cores from a sleep mode based on a predicted increase in workload in the near future.

The AI model may be trained by providing historical data of network traffic load for each application process. In the CaaS layer, the analytics provide resource utilisation metrics for the RAN workloads. These metrics may be used to translate the traffic to the pod level, to ascertain how much CPU workload is required for each pod (i.e., resource utilisation at the pod level).

The AI may be trained statically ahead of time (as described above) and may also be trained dynamically, while in operation. For example, 3-6 months of historical traffic data may be used to initially train the model ahead of time. Then, the model may be run in the edge centre and the live traffic data may be collected for a further period of 3 months using the model. Then, the offline analysis may be run again using the live traffic data to see whether the Al model works as required. Based on this analysis, the model may be fine-tuned.

Locally, small marginal tuning in configuration may be made to the model, based on live traffic. However, this is likely to relate to selection of configurations, rather than tuning of the Al model parameters.

In the example illustrated in Fig. 4, the application processes (RAN workloads) only use the CPU pool. There are no CPU cores that are statically allocated to the RAN workloads (dedicated cores). The scheduler has control over the full CPU pool. In some examples, this may be 62 CPU cores (32 per server where two are reserved for the CaaS scheduler). The benefits of the proposed methods, such as power saving, are more pronounced where the majority of CPU resources are in a large pool (in contrast to the example of Fig. 3, where only seven cores are in the CPU pool).

In some example current deployments, the cloud platform in the edge network may comprise 2 servers, which run a single mode solution at the CaaS layer. These servers work together with each server providing a master node in standby/active configuration. The servers may be synchronised together and resource sharing may be configured between the servers so that the CPU pool comprises CPU cores from both servers.

Benefits of the proposed methods may further increase with larger numbers of servers, as there may then be yet more CPU cores in the CPU pool managed by the CaaS scheduler. For example, in massive MIMO scenarios, there may be five servers per node. Moreover, the number of cores per server may increase over time, due to improving hardware capabilities and the number of servers in each node may also increase with time, to match increasing network demand.

The AI model may be implemented on the cloud platform in the edge network (with a short latency). Small marginal tuning of the AI model with live traffic data may be performed at the edge network. However, the AI model may be trained and updated offline in a manager of the CaaS platform (CaaS manager), which may be in a data centre in a separate network.

The CaaS manager may collect the statistics and logs for each cluster. Therefore, the CaaS manager may provide the training data or synthetic training data may be used. Moreover, the CaaS manager is well-placed to determine whether the model works as intended. The information and logs (metric collections) may be used to help to train/update the Al model.

In some examples, the remote CaaS manager may also tune the Al model in real time.

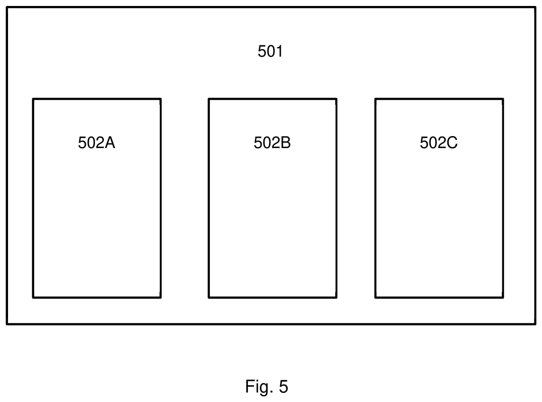

Fig. 5 illustrates a cloud platform 501 according to a specific example. The cloud platform 501 comprises a plurality of processor cores 502A, 502B, 502C.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a mobile device, a network entity, a step, a parameter, or a message) means "one or more" (for instance one or more mobile devices, one or more network entities, one or more steps, one or more parameters, or one or more messages). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.

In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of managing hardware resources in an Open Radio Access Network, Open RAN, cloud platform, wherein the cloud platform comprises a plurality of processor cores, wherein the cloud platform is configured to host a plurality of application processes, the method comprising:
dynamically allocating zero or more processor cores of the plurality of processor cores to each of the plurality of application processes, based on processing requirements of the respective application process.

2. The method of claim 1, wherein dynamically allocating zero or more cores to each of the plurality of applications comprises allocating zero cores to an application process if the respective processing requirements of the application process are zero.

3. The method of claim 1 or claim 2, wherein the cloud platform is a containerised cloud platform and wherein each of the application processes is hosted via a respective pod managed by the containerised cloud platform.

4. The method of any preceding claim, wherein one or more of the plurality of processor cores are dedicated cores allocated to a scheduler of the cloud platform.

5. The method of claim 4, wherein each of the plurality of processor cores that are not the one or more dedicated cores, form a resource pool, and wherein dynamically allocating zero or more processor cores of the plurality of processor cores to each of the plurality of application processes comprises dynamically allocating the zero or more processor cores from the resource pool to each of the plurality of application processes.

6. The method of any preceding claim, wherein the processing requirements of each application process comprise forecasted processing requirements, wherein a model is used to forecast the processing requirements for the application processes.

7. The method of claim 6:
wherein the model is an artificial intelligence, AI, model; and/or
wherein the model is trained using historical data of the processing requirements of the application processes or via synthetic training data.

8. The method of claim 6 or claim 7, wherein each of the plurality of processor cores is operable in one or more processor idle sleep states, wherein the method further comprises:
transitioning a processor core of the plurality of processor cores to an idle sleep state, based on the forecasted processing requirements of the respective application process to which the processor core is allocated.

9. The method of any of claims 6 to 8, wherein each of the plurality of processor cores is operable in one or more power performance states, wherein the method further comprises:
transitioning a processor core of the plurality of processor cores to a power performance state, based on the forecasted processing requirements of the respective application process to which the processor core is allocated.

10. The method of any preceding claim, wherein the processing requirements comprise a data processing load and/or a network traffic load.

11. The method of any preceding claim, wherein each of the plurality of processor cores is operable in a normal mode and one or more power-saving modes, the method further comprising:
transitioning one or more of the plurality of processor cores to a power-saving mode, based on the processing requirements of the plurality of application processes; and/or
transitioning one or more of the plurality of processor cores from a power-saving mode to normal mode, based on the processing requirements of the plurality of application processes.

12. The method of claim 11, wherein the one or more power-saving modes comprise:
one or more processor idle sleep states; and/or
one or more power performance states.

13. The method of any preceding claim, wherein the cloud platform comprises one or more servers, preferably a plurality of servers, wherein the plurality of processor cores comprises a respective plurality of processor cores from each server.

14. A cloud platform configured to perform the method of any preceding claim.

15. A computer program comprising instructions that, when executed on a processor, cause the processor to perform the method of any of claims 1 to 13.
